# FASCICULE DE BREVET EUROPEEN

(11) **EP 0 527 065 B1**
(45) Date de publication et mention de la délivrance du brevet: **06.11.1996**
(21) Numéro de dépôt: 92401783.3
(22) Date de dépôt: 25.06.1992
(51) Int. Cl.: B60L 7/24, B60T 13/66, B60T 8/30

(54) **Système de freinage à décalage de pression et valve pour un tel système**
Bremssystem mit Druckverschiebung und Ventil für ein solches System
Brake system with pressure shift and valve for such a system

(30) Priorité: 30.07.1991 FR 9109666
(43) Date de publication de la demande: 10.02.1993
(73) Titulaire: ALLIEDSIGNAL EUROPE SERVICES TECHNIQUES, 93700 Drancy (FR)
(72) Inventeur: Morin, Gérard, Bendix Europe Serv. Techn., F-93700 Drancy (FR); Vadaine, Frank, Bendix Europe Serv. Techn., F-93700 Drancy (FR); Perrin, Alain, Bendix Europe Serv. Techn., F-93700 Drancy (FR); Castel, Philippe, Bendix Europe Serv. Techn., F-93700 Drancy (FR)
(74) Mandataire: Bentz, Jean-Paul

(56) Documents cités:
- EP-A- 0 394 065
- DE-A- 1 788 077
- DE-B- 1 144 755

## Description

La présente invention concerne les systèmes de freinage pour véhicules automobiles et, plus particulièrement les systèmes de freinage pour véhicules automobiles équipés d'au moins un circuit fluidique de freinage et d'un circuit électrique de freinage.

Les véhicules automobiles à moteur électrique comportent généralement un tel système de freinage à deux sources permettant notamment d'assurer la sécurité du véhicule en cas de défaillance électrique.

Toutefois, dans de tels véhicules, il est souvent souhaitable de récupérer l'énergie dissipée lors du freinage sous forme d'un courant électrique alimentant la source d'énergie électrique embarquée, de manière à donner plus d'autonomie au véhicule.

Dans ce cas, on préfère mettre en oeuvre le circuit électrique de freinage pour les freinages les plus courants, tandis que l'on n'utilise le circuit fluidique de freinage qu'en cas de fort freinage ou d'urgence, puisqu'un circuit fluidique ne permet pas la récupération de l'énergie.

La présente invention a pour but un tel système, connu par exemple du document DE-B-1 144 755, et dans lequel le circuit fluidique de freinage reste sans effet tant que la pression du fluide dans la source, de fluide sous pression n'atteint pas un seuil déterminé.

Ce but est réalisé par l'objet des revendications 1 et 2.

L'invention sera mieux comprise, et d'autres buts avantages et caractéristiques apparaîtront plus clairement à la lecture de la description qui suit d'un mode préféré de réalisation et à laquelle sont jointes deux planches de dessins sur lesquelles :
- la Figure 1 représente schématiquement en coupe une valve à décalage de pression conforme à l'invention,
- la Figure 2 représente schématiquement en coupe une valve conforme à l'invention et faisant fonction de correcteur de freinage, et
- la Figure 3 représente la valve de la Figure 2 pourvue d'un perfectionnement facilitant le défreinage.

En référence maintenant aux Figures, un piston 10 est monté à coulissement étanche dans un alésage pratiqué dans un boîtier 12. Le piston 10 divise l'alésage en deux chambres, une chambre d'entrée 14 reliée à une source de fluide sous pression (non représentée), par exemple un maître-cylindre, et une chambre de sortie 16 reliée à un moteur hydraulique de frein (non représenté).

Les deux chambres 14,16 communiquent entre elles par un passage 20 ménagé dans le piston 10. Une soupape comprenant une bille 22 est montée dans le passage 20 et est sollicitée par un ressort 24 contre un siège 26 formé dans le piston 10.

Une butée en forme d'aiguille 30 fait saillie de la chambre de sortie 16 dans le passage 20 pour écarter la bille 22 de son siège 26 lorsque le piston 10 se déplace.

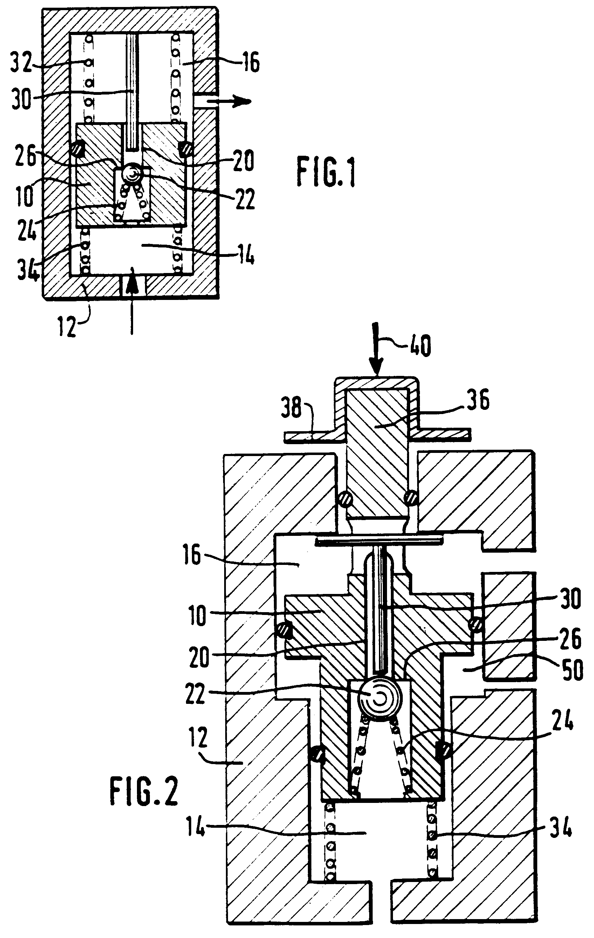

En référence maintenant plus particulièrement à la figure 1, un ressort précontraint 32 est disposé dans la chambre de sortie et agit sur le piston 10 à l'encontre de la force engendrée par la pression du fluide dans la chambre d'entrée 14. Un ressort 34 disposé dans la chambre d'entrée 14 permet d'équilibrer le piston 10 au repos.

Le fonctionnement est le suivant. Au repos, la bille 22 repose sur son siège 26 interrompant toute communication entre les deux chambres. Lors d'un freinage, la pression augmente dans la chambre d'entrée 14 et le piston 10 tend à se déplacer à l'encontre du ressort 32. Pour une pression déterminée par la précontrainte du ressort 32, l'aiguille 30 vient dégager la bille 22 de son siège 26, ouvrant ainsi le passage 20. Le moteur fluidique de frein est alors alimenté en conséquence sans variation brusque de la pression du fluide dans la chambre de sortie puisque celle-ci contribue à l'effet du ressort 32. La montée en pression dans le moteur fluidique correspond donc bien à la montée en pression dans le maître-cylindre, mais avec un décalage de pression pendant lequel le circuit de freinage électrique aura pu fonctionner.

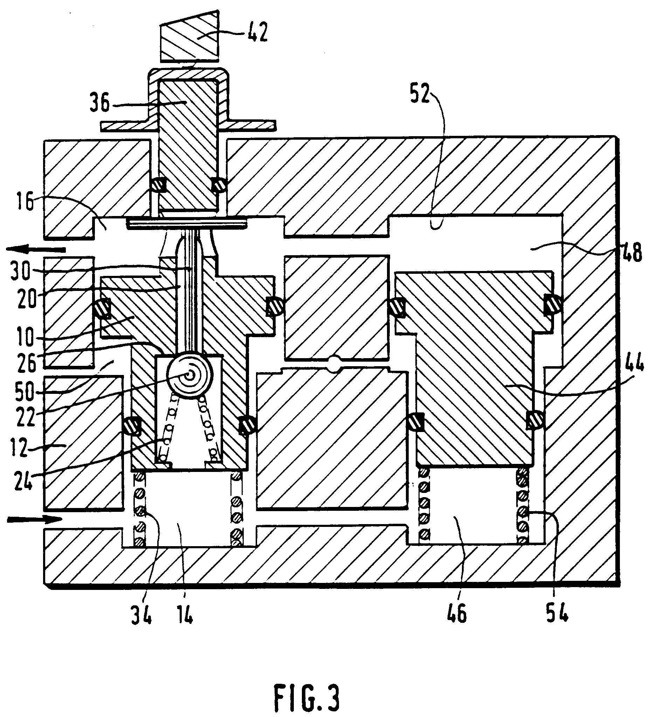

Figures 2 et 3, la valve à décalage de pression représentée fonctionne en correcteur de freinage puisqu'elle met en oeuvre un piston différentiel 10 coulissant dans un alésage étagé. De ce fait, une double étanchéité est nécessaire et une chambre intermédiaire 50 mise à la pression atmosphérique est ménagée entre les chambres d'entrée 14 et de sortie 16.

Comme on peut le constater, le piston 10 porte un prolongement 36 faisant saillie de façon étanche du boîtier 12. Ce prolongement 36, sur l'exemple représenté, porte un chapeau 38 sur lequel est appliquée une force extérieure 40 (Figure 2). Cette force extérieure peut être engendrée par un ressort précontraint (comme illustré Figure 1) ou bien par un levier dont une extrémité 42 (Figure 3) reçoit la charge du véhicule, de manière à fonctionner en compensateur sensible à la charge du véhicule.

La force extérieure 40 peut aussi être partiellement ou totalement représentative de la vitesse du véhicule et par exemple appliquée par un électroaimant proportionnel alimenté en fonction de cette vitesse. Une telle disposition permet en effet de retarder l'actionnement des freins arrière en tenant compte du couple de freinage, variable avec la vitesse du véhicule, qu'exerce le dispositif de récupération d'énergie électrique.

Figure 3, on a représenté un perfectionnement à la valve facilitant la baisse de pression dans les freins des roues arrière lors d'un défreinage, par augmentation de volume du circuit correspondant.

A cet effet, la valve comporte un deuxième alésage dans lequel peut coulisser de façon étanche un deuxième piston 44.

Ce piston 44 délimite deux chambres dont l'une 46 est reliée à la chambre d'entrée 14 et l'autre 48 est reliée à la chambre de sortie 16.

Au repos et au freinage, le piston 44 reste en butée sur le fond 52 de la chambre 48 sous l'action d'un ressort 54 disposé dans la chambre 46. Lors du défreinage, il descend ce qui permet d'augmenter le volume de la chambre 48 pour faire chuter plus rapidement la pression dans la chambre de sortie 16.

Bien que seuls certains modes préférés de réalisation de l'invention aient été représentés et décrits, il est évident que l'homme du métier pourra y apporter changements et modifications sans sortir du cadre de l'invention tel que défini par les revendications.

## Revendications

1. Système de freinage pour véhicule équipé d'un circuit fluidique de freinage alimentant au moins un moteur fluidique de frein à partir d'une source de fluide sous pression et d'un circuit électrique de freinage à actionnement préféré, le circuit fluidique de freinage restant sans effet tant que la pression du fluide de ladite source de fluide sous pression n'atteint pas un seuil déterminé, caractérisé en ce qu'une valve à décalage de pression est disposée en série entre ladite source de fluide sous pression et ledit moteur fluidique, cette valve à décalage de pression comportant un boîtier (12) pourvu d'un alésage, un piston (10) délimitant une chambre d'entrée (14) reliée à ladite source de fluide sous pression et une chambre de sortie (16) reliée audit moteur fluidique, lesdites chambres (14,16) communiquant entre elles par l'intermédiaire d'un passage (20) ménagé dans ledit piston (10), une soupape (22,30) étant montée dans ledit passage et élastiquement sollicitée en appui contre un siège (26) formé sur le piston, ladite soupape (22,30) restant fermée tant que la pression dudit fluide dans ladite chambre d'entrée (14) est inférieure à un seuil déterminé.

2. Valve à décalage de pression pour système de freinage selon la revendication 1 comportant un boitier (12) pourvu d'un alésage, un piston (10) délimitant une chambre d'entrée (14) reliée à ladite source de fluide sous pression et une chambre de sortie (16) reliée audit moteur fluidique, lesdites chambres (14, 16) communiquant entre elles par l'intermédiaire d'un passage (20) ménagé dans ledit piston (10), une soupape (22,30) étant montée dans ledit passage et élastiquement sollicitée en appui contre un siège (26) formé sur le piston, ladite soupape restant fermée tant que la pression dudit fluide dans ladite chambre d'entrée (14) est inférieure à un seuil déterminé caractérisée en ce que ledit seuil est déterminé par l'action d'une force appliquée audit piston (10) s'opposant à l'ouverture de ladite soupape (22, 30).

3. Valve à décalage de pression selon la revendication 2, caractérisée en ce que ladite force est constante et est générée par un ressort précontraint (32) dont l'action s'oppose à l'effet de la pression dudit fluide dans la chambre d'entrée (14).

4. Valve à décalage de pression selon la revendication 2, caractérisée en ce que ladite force (40) varie en fonction de la charge du véhicule.

5. Valve à décalage de pression selon la revendication 2, caractérisée en ce que ladite force varie en fonction de la vitesse du véhicule.

6. Valve à décalage de pression selon l'une quelconque des revendications 2 à 5 caractérisée en ce que ladite soupape comprend une bille (22) disposée dans ladite chambre d'entrée (14) sur laquelle est susceptible d'agir une butée en forme d'aiguille (30) faisant saillie de ladite chambre de sortie (16) dans ledit passage (20).

7. Valve à décalage de pression selon l'une quelconque des revendications 2 à 5 caractérisée en ce que ledit boîtier comporte un deuxième alésage dans lequel est susceptible de coulisser de façon étanche un deuxième piston (44) délimitant deux chambres dont l'une (48) est reliée à ladite chambre de sortie (16) et l'autre (46) à ladite chambre d'entrée (14).

8. Valve à décalage de pression selon l'une quelconque des revendications 2 à 5 caractérisée en ce que ledit piston (10) est de type différentiel pour que ladite valve à décalage de pression fasse, en outre, fonction de correcteur.

## Claims

1. Brake system for a vehicle equipped with a fluid brake circuit feeding at least one fluid brake motor from a pressurized fluid source, and with a preferentially operating electric brake circuit, the fluid brake circuit being inoperative as long as the pressure of the fluid of said pressurized fluid source does not reach a predetermined threshold, characterized in that a pressure lag valve is disposed in series between said pressurized fluid source and said fluid motor, this pressure lag valve comprising a casing (12) provided with a bore, a piston (10) delimiting an inlet chamber (14) connected to said pressurized fluid source, and an outlet chamber (16) connected to said fluid motor, said chambers (14, 16) being in communication with one another by way of a passage (20) formed in said piston (10), and a valve closure member (22, 30) being mounted in said passage and being resiliently urged against a seat (26) formed on the piston, said valve closure member (22, 30) remaining closed as long as the pressure of said fluid in said inlet camber (14) is lower than a predetermined threshold.

2. Pressure lag valve for a brake system according to Claim 1 comprising a casing (12) provided with a bore, a piston (10) delimiting an inlet chamber (14) connected to said pressurized fluid source, and an outlet chamber (16) connected to said fluid motor, said chambers (14, 16) being in communication with one another by way of a passage (20) formed in said piston (10), and a valve closure member (22, 30) being mounted in said passage and being resiliently urged against a seat (26) formed on the piston, said valve closure member (22, 30), remaining closed as long as the pressure of said fluid in said inlet camber (14) is lower than a predetermined threshold characterized in that said threshold is determined by the action of a force applied to said piston (10) and opposing the opening of said valve closure member (22, 30).

3. Pressure lag valve according to Claim 2, characterized in that said force is constant and is generated by a prestressed spring (32) whose action opposes the effect of the pressure of said fluid in said inlet chamber (14)

4. Pressure lag valve according to Claim 2, characterized in that said force (40) varies in dependence on the vehicle load.

5. Pressure lag valve according to Claim 2, characterized in that said force varies in dependence on the vehicle speed.

6. Pressure lag valve according to any of Claims 2 to 5, characterized in that said valve closure member comprises a ball (22) which is disposed in said inlet chamber (14) and which can be acted on by a needle-shaped stop (30) projecting from said outlet chamber (16) into said passage (20).

7. Pressure lag valve according to any of Claims 2 to 5, characterized in that said casing is provided with a second bore in which a second piston (44) is sealingly slideable, said second piston delimiting two chambers of which one (48) is connected to said outlet chamber (16) and the other (46) is connected to said inlet chamber (14).

8. Pressure lag valve according to any of Claims 2 to 5, characterized in that said piston (10) is of the differential type so that said pressure lag valve also functions as a regulator.

## Patentansprüche

1. Bremssystem für ein Fahrzeug, das mit einem Fluidbremskreis versehen ist, der ausgehend von einer Druckfluidquelle und einem elektrischen Bremskreis mit bevorzugter Betätigung wenigstens eine Fluid-Bremsbetätigungsvorrichtung versorgt, wobei der Fluidbremskreis ohne Wirkung bleibt, solange der Druck des Fluides der Druckfluidquelle nicht eine bestimmte Schwelle erreicht, dadurch gekennzeichnet, daß in Reihe zwischen der Druckfluidquelle und der Fluid-Betätigungsvorrichtung ein Ventil mit Druckverschiebung angeordnet ist, wobei dieses Ventil mit Druckverschiebung ein mit einer Bohrung versehenes Gehäuse (12) und einen Kolben (10) aufweist, der eine mit der Druckfluidquelle verbundene Eingangskammer (14) und eine mit der Fluid-Betätigungsvorrichtung verbundene Ausgangskammer (16) abgrenzt, wobei die Kammern (14, 16) über einen in dem Kolben (10) ausgebildeten Durchgang (20) miteinander in Verbindung stehen, wobei in dem Durchgang ein Ventilelement (22, 30) angebracht ist, das elastisch in Anlage an einen an dem Kolben gebildeten Sitz (26) beaufschlagt ist, wobei das Ventilelement (22, 30) geschlossen bleibt, solange der Druck des Fluides in der Eingangskammer (14) kleiner als eine bestimmte Schwelle ist.

2. Ventil mit Druckverschiebung für ein Bremssystem nach Anspruch 1, mit einem mit einer Bohrung versehenen Gehäuse (12), einem Kolben (10), der eine mit der Druckfluidquelle verbundene Eingangskammer (14) und eine mit der Fluid-Betätigungsvorrichtung verbundene Ausgangskammer (16) abgrenzt, wobei die Kammern (14, 16) über einen in dem Kolben (10) ausgebildeten Durchgang (20) miteinander in Verbindung stehen, wobei in dem Durchgang ein Ventilelement (22, 30) angebracht ist, das elastisch in Anlage an einen an dem Kolben ausgebildeten Sitz (26) beaufschlagt ist, wobei das Ventilelement geschlossen bleibt, solange der Druck des Fluides in der Eingangskammer (14) kleiner als eine bestimmte Schwelle ist, dadurch gekennzeichnet, daß die Schwelle durch die Wirkung einer Kraft bestimmt ist, die auf den Kolben (10) aufgebracht wird und dem Öffnen des Ventilelementes (22, 30) entgegenwirkt.

3. Ventil mit Druckverschiebung nach Anspruch 2, dadurch gekennzeichnet, daß die Kraft konstant ist und von einer vorgespannten Feder (32) erzeugt wird, deren Wirkung der Auswirkung des Drucks des Fluides in der Eingangskammer (14) entgegenwirkt.

4. Ventil mit Druckverschiebung nach Anspruch 2, dadurch gekennzeichnet, daß sich die Kraft (40) in Abhängigkeit von der Beladung des Fahrzeugs ändert.

5. Ventil mit Druckverschiebung nach Anspruch 2, dadurch gekennzeichnet, daß sich die Kraft in Abhängigkeit von der Geschwindigkeit des Fahrzeugs ändert.

6. Ventil mit Druckverschiebung nach einem der Ansprüche 2 bis 5, dadurch gekennzeichnet, daß das Ventilelement eine Kugel (22) aufweist, die in der Eingangskammer (14) angeordnet ist und auf die ein Anschlag in der Gestalt einer Nadel (30) einwirken kann, der aus der Ausgangskammer (16) in den Durchgang (20) hinein hervorsteht.

7. Ventil mit Druckverschiebung nach einem der Ansprüche 2 bis 5, dadurch gekennzeichnet, daß das Gehäuse eine zweite Bohrung aufweist, in der in dichter Weise ein zweiter Kolben (44) gleiten kann, der zwei Kammern abgrenzt, von denen eine (48) mit der Ausgangskammer (16) und die andere (46) mit der Eingangskammer (14) verbunden ist.

8. Ventil mit Druckverschiebung nach einem der Ansprüche 2 bis 5, dadurch gekennzeichnet, daß der Kolben (10) ein Differentialkolben ist, damit das Ventil mit Druckverschiebung außerdem eine Korrekturfunktion ausführt.
